# EUROPÄISCHE PATENTSCHRIFT

(11) **EP 1 547 107 B1**
(45) Veröffentlichungstag und Bekanntmachung des Hinweises auf die Patenterteilung: **29.07.2009**
(21) Anmeldenummer: 03750310.9
(22) Anmeldetag: 03.09.2003
(51) Int. Cl.: H01H 1/02, H01R 13/03

(54) **ELEKTRISCHER KONTAKT**
ELECTRICAL CONTACT
CONTACT ELECTRIQUE

(30) Priorität: 27.09.2002 DE 10245343
(43) Veröffentlichungstag der Anmeldung: 29.06.2005
(73) Patentinhaber: ROBERT BOSCH GMBH, 70442 Stuttgart (DE)
(72) Erfinder: REHBEIN, Peter, 71287 Weissach (DE); HAAS, Volker, 70839 Gerlingen-Schillerhöhe (DE)
(86) Internationale Anmeldenummer: PCT/DE2003/002916
(87) Internationale Veröffentlichungsnummer: WO 2004/032166

(56) Entgegenhaltungen:
- EP-A- 0 825 682
- EP-A- 1 081 251
- EP-A- 1 096 523
- DE-A- 3 212 005
- DE-A- 3 509 022
- DE-A- 19 932 867
- DE-C- 3 635 692
- DE-C- 19 953 780
- US-A- 4 399 339
- US-A- 6 007 390

## Beschreibung

### Stand der Technik

Die Erfindung geht von einem elektrischen Kontakt, insbesondere einem elektrischen Kontakt eines Steckverbinders, gemäß der im Oberbegriff des patentanspruches 1 näher definierten Art aus.

Ein derartiger Kontakt ist beispiels weise aus EP 1 096 523 A2 bekannt.

Ein weiterer elektrischer Kontakt ist aus der Praxis bekannt und kommt beispielsweise im Automotive-Bereich zum Einsatz.

Ein solcher elektrischer Kontakt umfaßt ein metallisches Substrat, das üblicherweise aus einer Legierung auf Kupferbasis, wie CuSn4 = Bronze, CuNiSi oder dergleichen, besteht und auf dem eine Kontaktschicht aus Zinn angeordnet ist.

Die Kontaktschicht kann eine feuerverzinnte oder galvanisch abgeschiedene Schicht sein, die eine Dicke von wenigen Mikrometern aufweist. An der Grenzfläche zu dem Substrat bildet sich bei Einsatz einer Zinnkontaktschicht durch Diffusion eine Zwischenschicht aus, die aus intermetallischen Verbindungen, wie CuSn4, Cu5Sn6, besteht. Die Zwischenschicht ist härter als die Kontaktschicht und kann temperaturbedingt wachsen.

Zinn bzw. eine Zinnlegierung zeichnet sich durch eine hohe Duktilität sowie durch eine gute elektrische Leitfähigkeit aus. Zinnlegierungen bzw. -schichten haben jedoch den Nachteil, daß sie aufgrund ihrer geringen Härte und des daraus resultierenden geringen Verschleißwiderstandes bei häufigen Steckvorgängen oder durch fahrzeug- bzw. motorbedingte Vibrationen zu Durchrieb neigen, was zu verstärkter Oxidation, der sogenannten Reibkorrosion, führt. Der Durchrieb und/oder die Reibkorrosion können wiederum zu einem Ausfall einer dem betreffenden Kontakt zugeordneten, elektrischen Komponente eines Kraftfahrzeuges, beispielsweise eines Sensors, eines Steuergeräts oder dergleichen, führen.

Bei derartigen Zinn- bzw. Zinnlegierungsschichten ist es weiter nachteilig, daß die Steckkräfte für viele Anwendungsfälle zu hoch sind, da diese Kontaktschichten eine ho= he Adhäsionsneigung sowie eine hohe plastische Verformbarkeit aufweisen.

Des weiteren ist aus der Praxis eine auf Zinn-Basis hergestellte, auch Thermözinn genannte Kontaktschicht eines elektrischen Kontakts bekannt, die vollständig aus intermetallischen Phasen besteht und durch Warmauslagerung hergestellt wird. Es hat sich jedoch gezeigt, dass Thermozinn nur eine beschränkte Einsetzbarkeit aufweist, was sich insbesondere auf der Grundlage chemischer Tests und Abrasionstests ermitteln läßt.

Ferner werden bisher bei elektrischen Kontakten als Kontaktschicht auch häufig AuCo-Legierungen mit Unternickelung, Silber-Schichten mit Unterkupferung oder Unternickelung oder auch Goldschichten eingesetzt.

Insbesondere Oberflächen bzw. Kontaktschichten auf der Basis von Silber, aber auch von Zinn, neigen zur Kaltverschweißung aufgrund von Adhäsion und sind in Selbstpaarungen durch hohe Reibwerte gekennzeichnet.

Auch bei bisher bei elektrischen Kontakten eingesetzten Silber- oder Goldschichten kann es bei einem Schichtdurchrieb oder aufgrund von Abplatzern der Schicht zu oxidativen Verschleißvorgängen des Substrats oder auch einer als Haftschicht dienenden Zwischenschicht, die häufig aus Kupfer oder Nickel besteht, kommen.

### Vorteile der Erfindung

Der elektrische Kontakt nach der Erfindung, mit einem metallischen Substrat, auf dem eine Kontaktschicht aufgebracht ist, welche mit einer Gefügestrukturierung gemäß Anspruch 1 ausgebildet ist, hat den Vorteil eines optimierten tribologischen Verhaltens, da dieses durch die Gefügestrukturierung einstellbar ist. Insbesondere ist es möglich, durch eine geeignete Gefügestrukturierung der Kontaktschicht einen elektrischen Kontakt mit reduzierten Reibwerten und einem erhöhten Verschleißwiderstand herzustellen.

Wie üblich, weist die Kontaktschicht des elektrischen Kontaktes eine Schichtdicke zwischen 1 µm und 6 µm auf. Die Gefügestrukturierung liegt dann bevorzugt in dem Bereich zwischen 1 nm und 1 µm, so daß es sich um eine sogenannte Nanostrukturierung handelt.

Das Substrat des elektrischen Kontaktes nach der Erfindung kann ein üblicherweise bei Steckverbindungen im Automotive-Bereich eingesetztes Substrat, beispielsweise eine Legierung auf Kupferbasis, wie CuSn4-Bronze, CuNiSi oder dergleichen, sein. Alternativ könnte auch ein Substrat aus einer Legierung auf Nickelbasis eingesetzt werden.

Nach einer speziellen Ausführungsform des elektrischen Kontaktes nach der Erfindung ist die Gefügestrukturierung derart ausgebildet, daß Teilchen in Form von Ölkupseln einer Größe zwischen 1 nm und 1 µm in einer Matrix der Kontaktschicht verteilt bzw. dispergiert sind.

Die Teilchengröße der in der Matrix dispergierten Teilchen in Form von Ölkupseln deren Anteil an der Matrix vorzugsweise zwischen 1 Vol.-% und 50 Vol.-% beträgt, liegt vorteilhaft in dem Bereich zwischen 20 nm und 200 nm. Derartige Teilchengrößen erweißen sich hinsichtlich der elektrischen und mechanischen Eigenschaften als ideal bei Kontaktschichten einer Dicke zwischen 1 µm und 6 µm.

Durch das Einbringen der Nanodispersion in die Matrix der Kontaktschicht kann die Lebensdauer, speziell die Steckzyklenzahl und/oder der Reibkorrosionswiderstand des elektrischen Kontaktes erhöht werden.

Bei der erfindungsgemäßen Ausführungsform des elektrischen Kontaktes nach der Erfindung sind die dispergierten Teilchen Mikro-Ölkapseln.

Die Mikroölkapseln, die mikroskopisch kleine Schmierstoffkapseln darstellen und bei einem galvanischen Prozeß in die Matrix eingebracht werden können, enthalten vorzugsweise einen tribologisch wirksamen Schmierstoff mit Antioxidantien und/oder antiadhäsiven Additiven und sind beispielsweise von einer Polymerhaut begrenzt. Die Antioxidantien und antiadhäsiven Additive werden bei einem derartigen Kontakt dort freigesetzt, wo die höchsten Oberflächenbeanspruchungen bei einem Steckvorgang oder bei Mikrobewegungen aufgrund von Schüttelbeanspruchungen vorliegen. Die die Ölkapseln begrenzenden Polymerhäute schmelzen bei einer kurzzeitigen Wärmeeinwirkung, die beispielsweise bei einer Erhöhung der Temperatur auf etwa 100 °C bis 200°c vorliegt, auf.

Eine homogene Verteilung der Mikro-Ölkapseln in der Matrix kann durch sogenanntes Ultraschallaufwirbeln oder auch durch andere geeignete strömungstechnische Maßnahmen erreicht werden.

Alternativ kann das Einbringen der Ölkapseln bzw. Ölkavitäten durch Aufschmelzen einer feuerverzinnten Oberfläche in einem Ölbad oder nach einem galvanischen Verfahren erfölgen. In diesem Fall weisen die Ölkapseln keine Polymerhäute auf.

Die in die Matrix eingebrachten Mikro-Ölkapseln stellen in dem Gefüge kohlenstoffhaltige Inseln dar und bewirken eine Optimierung der Reib-/Steckkräfte, eine Verlängerung der Schichtlebensdauer sowie eine Erhöhung des Reibkorrosionswiderstands.

Als Matrix für die Mikro-Ölkapseln kann bei einer vorteilhaften Ausführung der Erfindung insbesondere Zinn oder Silber dienen.

Zur Verbesserung der Kontaktierung zwischen dem elektrischen Kontakt und dessen Gegenkontakt kann die Kontaktschicht zumindest bereichsweise eine Edelmetall-Deckschicht aufweisen. Die Edelmetall-Deckschicht weist bevorzugt eine Dicke zwischen 0,1 µm und 0,3 µm auf und stellt damit eine sogenannte "Flash"-Schicht dar. Als Edelmetalle für die "Flash"-Schicht eignen sich insbesondere Ruthenium, Gold, Platin und/oder Palladium.

Die Herstellung der Kontaktschicht des elektrischen Kontakts nach der Erfindung erfolgt bevorzugt nach galvanischen Verfahren.

Weitere Vorteile und vorteilhafte Weiterbildungen des Gegenstandes nach der Erfindung sind der Beschreibung, der Zeichnung und den Patentansprüchen entnehmbar.

### Zeichnung

Drei Beispiele elektrischer Kontakte, welche nicht center den gegenstand des Anspruches 1 fallen, und ein Ausführungsbeispiel des elektrischen Kontakts nach der Erfindung sind in der Zeichnung schematisch vereinfacht dargestellt und werden in der nachfolgenden Beschreibung näher erläutert. Es zeigen
Figur 1 einen Schnitt durch einen ersten elektrischen Kontakt, welcher nicht unter den gegenstand des Anspruches 1 fällt;
Figur 2 einen Schnitt durch einen zweiten elektrischen Kontakt, welcher nicht under den gegenstand des Anspruches 1 fällt;
Figur 3 einen Schnitt durch eine Ausführungsform eines elektrischen Kontakts gemäß der Erfindung; und
Figur 4 einen Schnitt durch einen dritten elektrischen Kontakt, welcher nicht unter den gegenstand des Anspruches 1 fallt.

### Beschreibung der Ausführungsbeispiele

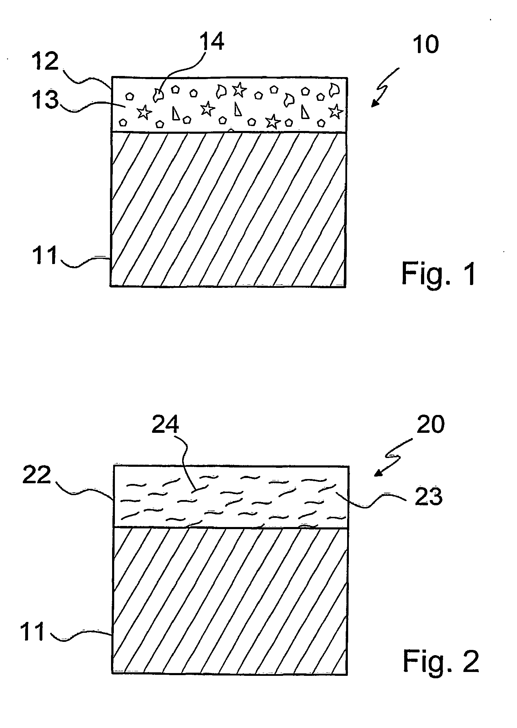

In Figur 1 ist schematisch eine Oberfläche eines elektrischen Kontaktes 10 dargestellt, der ein Kontakt eines Steckverbinders ist, der bei einem Automobil zum Einsatz kommt.

Der elektrische Kontakt 10 umfaßt ein Substrat 11, das aus einer Legierung auf Kupferbasis, wie CuSn4, CuNi2Si oder dergleichen, hergestellt ist. Die Dicke des Substrats 11 beträgt zwischen 0,1 mm und 0,5 mm.

Auf dem Substrat 11 ist eine Kontaktschicht 12 angeordnet, die nach einem galvanischen Verfahren aufgebracht ist. Die Kontaktschicht 12 hat eine Schichtdicke zwischen etwa 1 µm und 3 µm und weist eine aus Zinn bestehende Matrix 13 auf. In der Matrix 13 sind aus Aluminiumoxid Al₂O₃ bestehende, harte Teilchen 14 verteilt bzw. "dispergiert", die eine Teilchengröße zwischen 20 nm und 200 nm aufweisen. Die Kontaktschicht 12 stellt mithin eine Festkörper-Nanodispersion dar.

In Figur 2 ist prinzipmäßig ein elektrischer Kontakt 20 dargestellt, der ebenfalls ein Kontakt eines Steckverbinders ist, der zum Einsatz bei einem Automobil ausgelegt ist.

Entsprechend dem elektrischen Kontakt nach Figur 1 umfaßt der elektrische Kontakt 20 ein Substrat 11, das aus einer Legierung auf Kupferbasis hergestellt ist.

Das Substrat 11 des elektrischen Kontakts 20 ist mit einer Kontaktschicht 22 versehen, die eine Matrix 23 aus Silber aufweist. In der Silbermatrix 23 sind Graphit-Teilchen 24, sogenannte Graphit-Flakes, homogen verteilt. Die Graphit-Flakes 24 dienen als Festschmierstoff und haben eine Teilchengröße zwischen 1 µm und 1 nm. Die Graphit-Flakes können in Plättchenform vorliegen und ein Längen/Dicken-Verhältnis von etwa 2 bis 50 aufweisen und/oder auch jede andere beliebige Form, beispielsweise eine globulare Form, aufweisen.

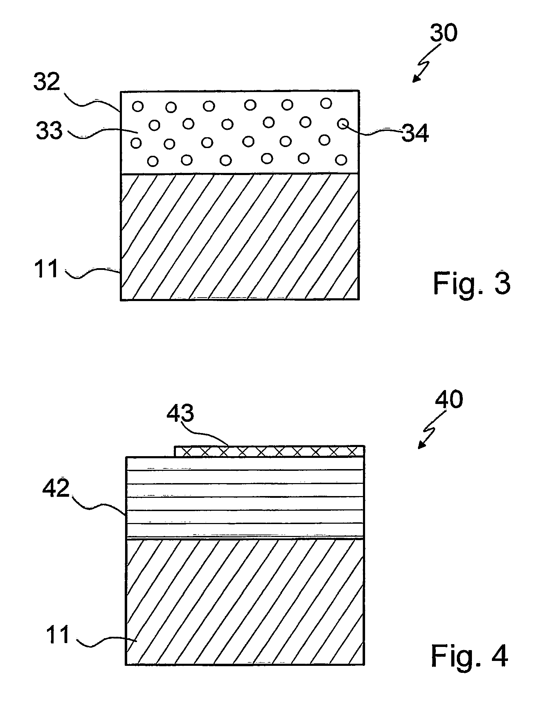

In Figur 3 ist ein erfindungsgemäßen elektrischer Kontakt 30 dargestellt, der ebenfalls ein Kontakt eines Steckverbinders ist, der zum Einsatz bei einem Automobil ausgelegt ist.

Entsprechend dem elektrischen Kontakt nach Figur 1 umfaßt der elektrische Kontakt 30 ein Substrat 11, das aus einer Legierung auf Kupferbasis hergestellt ist. Jedoch ist das Substrat 11 des elektrischen Kontakts 30 hier mit einer Kontaktschicht 32 versehen, die eine Matrix 33 aus Silber aufweist, in der Ölkapseln 34 verteilt bzw. dispergiert sind. Der Durchmesser der Ölkapseln 34 ist kleiner als 1 µm, liegt mithin im Sub-µm-Bereich. Die Ölkapseln enthalten einen tribologisch wirksamen Schmierstoff mit Antioxidantien und antiadhäsiven Additiven sowie eine Polymerhaut, welche bereits bei kurzzeitiger Wärmebeanspruchung aufschmilzt. Durch die Schmierstoffkapseln 34 lassen sich die Reib-/Steckkräfte, die bei Verbindung des elektrischen Kontakts 20 mit einem Gegenkontakt auftreten, reduzieren.

In Figur 4 ist ein elektrischer Kontakt 40 dargestellt, der ebenfalls ein Kontakt eines Steckverbinders ist, der bei einem Automobil zum Einsatz kommt.

Bei dem elektrischen Kontakt 40 ist auf einem Substrat 11, welches den Substraten der Ausführungsbeispiele nach den Figuren 1 bis 3 entspricht und mithin aus einer Legierung auf Kupferbasis besteht, ein Multilayer-Schichtsystem 42 angeordnet, das aus einer Vielzahl von Schichten besteht, deren Dicke im Nanometerbereich liegt. Die einzelnen Schichten unterscheiden sich durch ihren Chemismus und stellen jeweils eine Silber/Indium-Legierung dar, wobei sich der Silber- bzw. Indiumanteil von Schicht zu Schicht ändert. Das Schichtsystem 42 hat hier eine A-B-A-B...= Schichtfolge, wobei A und B jeweils für eine Silber/Indium-Legierung mit einer bestimmten Zusammensetzung stehen.

An der Oberseite der Kontaktschicht 42 ist bei dieser Ausführung eine als Deckschicht ausgebildete, sogenannte "Flash"-Schicht 43 aus Ruthenium oder Gold angeordnet. Die Deckschicht 43 weist vorliegend eine Dicke von etwa 0,1 µm auf.

## Patentansprüche

1. Elektrischer Kontakt, insbesondere ein elektrischer Kontakt eines Steckverbinders, mit einem metallischen Substrat (11), auf dem eine Kontaktschicht (12, 22, 32) aufgebracht ist, wobei die Kontaktschicht (12, 22, 32, 42) mit einer Gefügestrukturierung ausgebildet ist, wobei die Gefügestrukturierung derart ausgebildet ist, dass in der Matrix (13, 23, 33) Teilchen (14, 24, 34) dispergiert sind und **dadurch gekennzeichnet, dass** die dispergierten Teilchen (34) Ölkapseln sind.

2. Elektrischer Kontakt nach Anspruch 1, **dadurch gekennzeichnet, dass** die in er Matrix (13, 23, 33) dispergierten Teilchen (14, 24, 34) eine Größe zwischen 1 nm und 1 µm aufweisen.

3. Elektrischer Kontakt nach Anspruch 2, **dadurch gekennzeichnet, daß** der Anteil an in der Matrix (13, 23) dispergierten Teilchen (14, 24) zwischen 1 Vol.-% und 50 Vol.-% liegt.

4. Elektrischer Kontakt nach Anspruch 2 oder 3, **dadurch gekennzeichnet, daß** die Ölkapseln (34) einen Schmierstoff mit Antioxidantien und/oder antiadhäsiven Additiven umfassen und von einer Polymerhaüt begrenzt sind.

5. Elektrischer Kontakt nach einem der Ansprüche 2 bis 4, **dadurch gekennzeichnet, daß** die Matrix aus Silber öder einer Silberlegierung besteht und das Dispersionsgefüge galvanisch hergestellt ist.

6. Elektrischer Kontakt nach einem der Ansprüche 1 bis 5, **dadurch gekennzeichnet, daß** die Kontaktschicht (42) zumindest bereichsweise eine Edelmetall-Deckschicht (43) aufweist, die aus Gold, Silber, Platin, Ruthenium, Paladium oder einer Legierung dieser Elemente besteht.

## Claims

1. Electrical contact, in particular an electrical contact of a plug-type connector, comprising a metallic substrate (11) to which a contact layer (12, 22, 32) is applied, wherein the contact layer (12, 22, 32, 42) has a microstructure, wherein the microstructure is such that particles (14, 24, 34) are dispersed in the matrix (13, 23, 33), **characterized in that** the dispersed particles (34) are oil capsules.

2. Electrical contact according to Claim 1, **characterized in that** the size of the particles (14, 24, 34) dispersed in the matrix (13, 23, 33) is between 1 nm and 1 µm.

3. Electrical contact according to Claim 2, **characterized in that** the content of particles (14, 24) dispersed in the matrix (13, 23) is between 1% by volume and 50% by volume.

4. Electrical contact according to Claim 2 or 3, **characterized in that** the oil capsules (34) comprise a lubricant containing antioxidants and/or antiadhesive additives and are bounded by a polymer skin.

5. Electrical contact according to one of Claims 2 to 4, **characterized in that** the matrix consists of silver or a silver alloy and the dispersion microstructure is produced galvanically.

6. Electrical contact according to one of Claims 1 to 5, **characterized in that** at least regions of the contact layer (42) have a precious metal top layer (43) consisting of gold, silver, platinum, ruthenium, palladium or an alloy of these elements.

## Revendications

1. Contact électrique, notamment contact électrique d'un connecteur, comprenant un substrat métallique (11) sur lequel est appliquée une couche de contact (12, 22, 32), la couche de contact (12, 22, 32, 42) étant configurée avec une structuration de texture, la structuration de texture étant configurée de telle sorte que des particules (14, 24, 34) sont dispersées dans la matrice (13, 23, 33) et **caractérisé en ce que** les particules dispersées (34) sont des capsules d'huile.

2. Contact électrique selon la revendication 1, **caractérisé en ce que** les particules (14, 24, 34) dispersées dans la matrice (13, 23, 33) présentent une taille comprise entre 1 nm et 1 µm.

3. Contact électrique selon la revendication 2, **caractérisé en ce que** la proportion de particules (14, 24) dispersées dans la matrice (13, 23) est comprise entre 1 % volumique et 50 % volumiques.

4. Contact électrique selon la revendication 2 ou 3, **caractérisé en ce que** les capsules d'huile (34) contiennent un lubrifiant avec des additifs antioxydants et/ou antiadhésifs et sont délimitées par une peau en polymère.

5. Contact électrique selon l'une des revendications 2 à 4, **caractérisé en ce que** la matrice se compose d'argent ou d'un alliage d'argent et la texture de dispersion est fabriquée par procédé galvanique.

6. Contact électrique selon l'une des revendications 1 à 5, **caractérisé en ce que** la couche de contact (42) présente au moins dans certaines zones une couche de protection en métal précieux (43) qui se compose d'or, d'argent, de platine, de ruthénium, de palladium ou d'un alliage de ces éléments.
